# EUROPÄISCHE PATENTANMELDUNG

(11) **EP 1 480 321 A1**
(43) Veröffentlichungstag der Anmeldung: **24.11.2004**
(21) Anmeldenummer: 04005239.1
(22) Anmeldetag: 05.03.2004
(51) Int. Cl.: H02K 49/02

(54) **Elektrisches Antriebsaggregat**

(30) Priorität: 19.05.2003 DE 10322473
(71) Anmelder: ROBERT BOSCH GMBH, 70442 Stuttgart (DE)
(72) Erfinder: Nipp, Eckhart, 77830 Buehlertal (DE)

(57) **Zusammenfassung**

Es wird ein elektrisches Antriebsaggregat mit einem Doppelrotor (10) angegeben, der aus einem antreibbaren ersten Rotor (11) und einem von dem ersten Rotor (11) antreibbaren zweiten Rotor (12) besteht, die durch ihre magnetischen Drehfelder miteinander gekoppelt sind. Zur Erzielung kurzer Hochlaufzeiten des Antriebsaggregats bei einer Auslegung des Antriebsaggregats nur für den Nennbetrieb ist die Drehfeldkopplung zwischen den Rotoren (11, 12) steuerbar ausgeführt und so festgelegt, dass die Drehfeldkopplung erst nach Hochlaufen des ersten Rotors (11) auf eine oberhalb der Nenndrehzahl des zweiten Rotors (12) liegende Drehzahl erfolgt (Fig. 1).

## Beschreibung

### Stand der Technik

Die Erfindung geht aus von einem elektrischen Antriebsaggregat mit einem Doppelrotor nach dem Oberbegriff des Anspruchs 1.

Ein bekanntes, elektrisches Antriebsaggregat mit einem Doppelrotor (DE 41 18 678 Al) wird bei sog. Hybridantrieben für Kraftfahrzeuge eingesetzt, um das Kraftfahrzeug wahlweise mit einem Verbrennungsmotor oder mit einem Elektromotor oder mit beiden zugleich anzutreiben. Der äußere Rotor, der mit einem Permanentmagnetsystem ausgestattet ist, ist mit der Ausgangswelle des Verbrennungsmotors und der innere Rotor, der eine dreiphasige Rotorwicklung trägt, ist mit der Antriebswelle des Fahrzeugs verbunden. Die Rotorwicklung ist an drei auf der Antriebswelle sitzenden Schleifringen angeschlossen, auf denen jeweils eine Schleifbürste aufsitzt. Die Schleifbürsten sind über eine Leistungssteuerelektronik und einem DC/AC-Wandler mit einer Batterie verbunden. Der Doppelrotor stellt eine Schleifringläufermaschine dar, die bei Betrieb des Verbrennungsmotors - und damit rotierendem Permanentmagnetsystem - als Drehmomentenwandler und/oder Generator arbeitet. Bei Nichtbelastung der Rotorwicklung durch die Leistungssteuerelektronik wird das Drehmoment des Verbrennungsmotors über die Schleifringläufermaschine auf die Antriebswelle übertragen. Mit zunehmender Belastung der Rotorwicklung durch die Steuerelektronik, z.B. mittels einer Phasenanschnittsteuerung, wird ein Teil der Leistung des Verbrennungsmotors abgegriffen und über den Spannungswandler in die Batterie eingespeist. Bei rein elektrischem Antrieb des Fahrzeug, also bei stillstehendem Verbrennungsmotor wird der Doppelrotor von der Batterie über den Spannungswandler, die Leistungssteuerelektronik und die Schleifringe mit einer Wechselspannung beaufschlagt und arbeitet als das Fahrzeug antreibender Elektromotor.

### Vorteile der Erfindung

Das erfindungsgemäße Antriebsaggregat mit den Merkmalen des Anspruchs 1 hat den Vorteil, geforderte kurze Hochlaufzeiten des Antriebsaggregats zu erfüllen, ohne speziell für den Hochlauf dimensioniert werden zu müssen. Die erhöhte Beschleunigungsleistung beim Hochlauf wird aus einem mechanischen Energiespeicher bezogen und muss nicht elektrisch zur Verfügung gestellt werden. Als Energiespeicher fungiert der hier als Schwungrad wirkende, z.B. von einem Primärantrieb antreibbare erste Rotor, der zur Herstellung der Betriebsbereitschaft des Antriebsaggregats auf eine Drehzahl beschleunigt wird, die oberhalb der später angestrebten Betriebsdrehzahl liegt. Das Antriebsaggregat braucht damit lediglich für den Nennbetrieb ausgelegt zu werden, so dass die Auslegung von Netzspannung und Steuerelektronik ebenfalls nur auf die Nennleistung des Antriebsaggregats abgestellt werden müssen. Spitzen in der Netzbelastung beim schnellen Hochlauf werden ebenso vermieden wie Überlastungen der Steuerelektronik.

Das erfindungsgemäße Antriebsaggregat ist besonders für Betriebsarten geeignet, bei denen ein schneller Hochlauf bei anschließend kurzer Betriebszeit gefordert wird, wie dies beispielsweise bei elektrischen Zusatzverdichtern der Fall ist. Die nunmehr mögliche Auslegung für den Nennbetrieb, anstatt für den Hochlauf, was zu einer Überdimensionierung des Antriebsaggregats für den Nennbetrieb führen würde, ermöglicht das Betreiben eines solchen elektrischen Zusatzverdichters ohne Zusatzaufwand unmittelbar am Bordnetz des Kraftfahrzeugs. Die Auslegung der Steuerelektronik nur auf Nennbetrieb lässt auch hier die Gestehungskosten sinken.

Durch die in den weiteren Ansprüchen aufgeführten Maßnahmen sind vorteilhafte Weiterbildungen und Verbesserungen des im Anspruch 1 angegebenen Antriebsaggregats möglich.

Die Steuerung der Drehfeldkopplung zwischen den beiden Rotoren kann mechanisch oder elektrisch durchgeführt werden, wozu eine entsprechende Gestaltung der Rotoren erforderlich ist.

Gemäß einer vorteilhaften Ausführungsform der Erfindung trägt der eine Rotor ein Felderregersystem, z.B. ein Permanentmagnetsystem, und der andere Rotor eine Käfigwicklung. Einer der Rotoren, vorzugsweise der zweite Rotor, ist axial verschiebbar ausgebildet, um durch Axialverschiebung die magnetische Kopplung der Rotoren zu bewirken. Wird nach Hochlaufen des ersten Rotors der eigentliche Antrieb der angekoppelten Last gestartet, so wird der zweite Rotor axial in den ersten Rotor hinein verschoben, so dass die Käfigwicklung von den rotierenden Magnetfeld des ersten Rotors durchsetzt wird. Dies führt zum asynchronen Hochlauf des zweiten Rotors, was den Start eines klassischen Asynchronmotors am Netz ähnelt. Dem ersten Rotor wird dabei Energie entzogen, und die Drehzahl des ersten Rotors sinkt zunehmend bis auf Nenndrehzahl nach erfolgtem Hochlauf im stationären Betriebspunkt. Im stationären Betriebspunkt wird das gesamte, am zweite Rotor abgeforderte Lastmoment vom ersten Rotor und damit z.B. von dem den ersten Rotor antreibenden Primärantrieb aufgebracht.

Will man auf die konstruktiv etwas aufwendige, mechanische Verschiebung der Rotoren zwecks Herstellung der Drehfeldkopplung verzichten und die Herbeiführung der Drehfeldkopplung elektrisch vornehmen, so wird gemäß einer vorteilhaften Ausführungsform der Erfindung der erste Rotor mit einer Erregerwicklung versehen, die über Schleifringe mit einer Netzgleichspannung verbindbar ist. Bei abgeschaltetem Erregerstrom sind die beiden Rotoren entkoppelt und durch Einschalten des Erregerstroms wird die Kopplung hergestellt.

Eine besonders vorteilhafte Realisierung des ersten Rotors mit Rotorwicklung wird gemäß einer vorteilhaften Ausführungsform der Erfindung durch den Einsatz einer Ringwicklung mit Klauenpolanordnung erreicht. Um verschleißbehaftete Bürsten zu vermeiden, ist die Klauenpolanordnung fest mit dem ersten Rotor verbunden und die Ringspule feststehend angeordnet. Die Ringspule wird dabei vorzugsweise außenliegend angeordnet und von einem Rückschlussring umschlossen.

Die Drehfeldkopplung und -entkopplung der Rotoren ohne Rotorverschiebung lässt sich auch durch Manipulationen an dem abtriebseitigen, zweiten Rotor herbeiführen, und zwar sowohl mechanisch als auch elektrisch.

Gemäß einer vorteilhaften Ausführungsform der Erfindung weist die Käfigwicklung des zweiten Rotors üblicherweise in Rotornuten einliegende Käfigstäbe und zwei die Käfigstäbe an den Stirnenden elektrisch miteinander verbindende Kurzschlussringe auf, wobei der eine Kurzschlussring auf einem axial verschiebbaren Träger angeordnet ist und durch axiales Verschieben des Trägers auf die freiliegenden Stirnenden der Käfigstäbe aufsetzbar ist. Die Verschiebung des Trägers kann elektromagnetisch vorgenommen werden, indem der Träger als Magnetring ausgebildet ist, der innerhalb einer Ringspule einliegt, die vorzugsweise feststehend angeordnet ist.

In einer alternativen Ausführungsform der Erfindung trägt der zweite Rotor eine mehrsträngige Rotorwicklung, bei der die Wicklungsstränge an einem Strangende miteinander verbunden sind und am anderen Strangende jeweils an einer auf der Stirnseite des Rotors angeordneten Kontaktfläche angeschlossen sind. Alle Kontaktflächen liegen auf einem Teilerkreis. Ein axial verschiebbarer Träger trägt eine kreisringförmige Kontaktfläche, die auf die Kontaktflächen aufsetzbar ist und diese kurzschließt, wodurch die Drehfeldkopplung zwischen den Rotoren hergestellt ist.

Gemäß einer alternativen Ausführungsform der Erfindung kann die wie vorstehend beschriebene Rotorwicklung mit ihrem einen Strangende auch an jeweils einem auf der Abtriebswelle drehfest angeordneten Schleifring angeschlossen sein. Auf den Schleifringen schleifen Schleifbürsten, an denen Mittel zum Herstellen eines Kurzschlusses zwischen den Schleifbürsten vorgesehen sind. Mit Kurzschließen der Schleifbürsten ist die Drehfeldkopplung zwischen den Rotoren hergestellt.

Der Doppelrotor lässt sich sowohl in Radialfluss- als auch in Axialflusskonstruktion ausführen. Zum Antreiben des ersten Rotors können verschiedene Primärantriebe verwendet werden, so ein Gleichstrommotor, ein Asynchronmotor, ein Synchronmotor aber auch ein nichtelektrischer Antrieb.

Das erfindungsgemäße elektrische Antriebsaggregat bietet auch den Vorteil, dass der erste Rotor als integrierter Teil eines den Primärantrieb darstellenden, elektrischen Motors ausgeführt werden kann.

Gemäß einer vorteilhaften Ausführungsform der Erfindung bildet dabei der erste Rotor den Läufer des elektrischen Motors, vorzugsweise eines Synchronmotors, und trägt hierzu auf seiner Außenseite ein Permanentmagnetsystem, das mit einer im Ständer des Synchronmotors untergebrachten Erregerwicklung zusammenwirkt.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: einen Längsschnitt eines Antriebsaggregats mit Doppelrotor,
- Fig. 2 bis 4: jeweils ein Hochlaufdiagramm zur Illustrierung des elektrischen Verhaltens des Antriebsaggregats in Fig. 1,
- Fig. 5: eine gleiche Darstellung wie in Fig. 1 eines modifizierten Antriebsaggregats,
- Fig. 6: eine Draufsicht des inneren Rotors in Richtung Pfeil VI in Fig. 5,
- Fig. 7: eine Draufsicht des Magnetrings in Fig. 5 entgegen Pfeil VI,
- Fig. 8 bis 12: jeweils einen Längsschnitt eines Antriebsaggregats gemäß weiterer Ausführungsbeispiele,
- Fig. 13: eine Draufsicht einer Flächenpolscheibe im Antriebsaggregat gemäß Fig. 12.

### Beschreibung der Ausführungsbeispiele

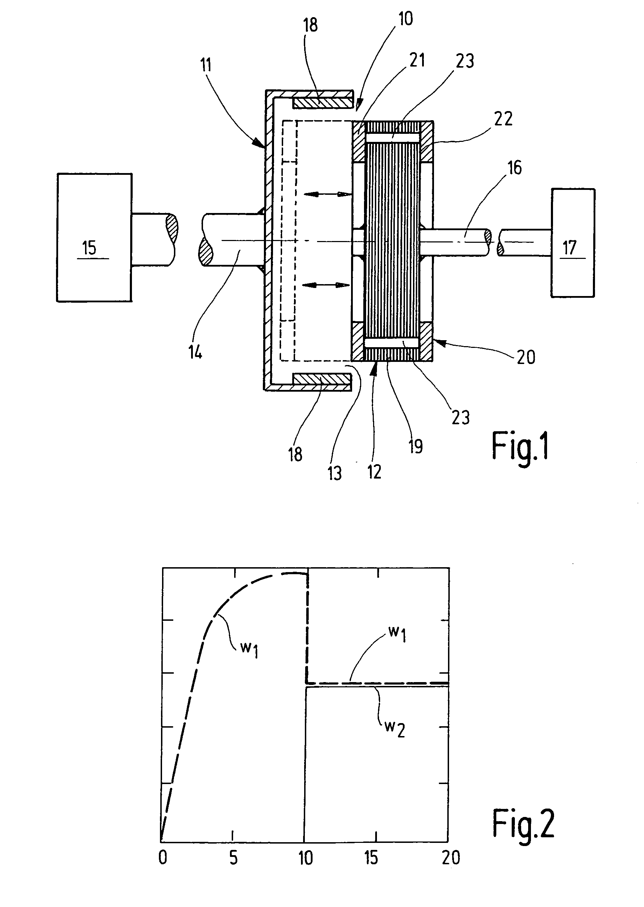

Das in Fig. 1 schematisch im Längsschnitt dargestellte elektrische Antriebsaggregat weist einen Doppelrotor 10 auf, der aus einem antreibbaren ersten Rotor 11 und einem von diesen antreibbaren zweiten Rotor 12 zusammengesetzt ist, wobei im Ausführungsbeispiel der Fig. 1 der erste Rotor 11 den zweiten Rotor 12 unter Belassung eines Luftspalts 13 mit radialer Luftspaltbreite konzentrisch umschließt. Der erste Rotor 11 ist über eine Antriebswelle 14 mit einem Primärantrieb 15 drehfest verbunden, während der zweite Rotor 12 über eine Abtriebswelle 16 auf eine anzutreibende Last 17 aufgeschaltet ist. Selbstverständlich ist es möglich, die beiden Rotoren 11, 12 zu vertauschen so dass der angetriebene erste Rotor der innenliegende Rotor und der mit der Last 17 gekoppelte Roter der außenliegende Rotor ist.

Der kappenförmig ausgebildete erste Rotor 11 trägt auf seiner dem zweiten Rotor 12 zugekehrten Innenfläche ein Permanentmagnetsystem aus einer Mehrzahl von um gleiche Umfangswinkel zueinander versetzt angeordneten Permanentmagneten 18, die aufeinanderfolgend gegensinnig in Radialrichtung magnetisiert sind. Der zweite Rotor 12, der im Ausführungsbeispiel als Käfigläufer ausgebildet ist, weist einen Rotorkörper 19 mit einer Käfigwicklung 20 auf. Die Käfigwicklung 20 besteht in bekannter Weise aus einer Mehrzahl von Käfigstäben 23 und zwei Kurzschlussringen 21, 22. Die Käfigstäbe 23 liegen in Axialnuten ein, die um gleiche Umfangswinkel zueinander versetzt im Rotorkörper 19 ausgestanzt sind, während die Kurzschlussringe 21, 22 auf den beiden Stirnseiten des Rotorkörpers 19 angeordnet sind und dort alle Stabenden der Käfigstäbe 23 elektrisch miteinander verbinden. Der zweite Rotor 12 ist axial verschieblich gehalten, so dass er durch eine axiale Verschiebebewegung aus seiner in Fig. 1 strichliniert angedeuteten, konzentrischen Lage zu den Permanentmagneten 18, in welcher die Drehfelder der Rotoren 11, 12 miteinander gekoppelt sind, in die in Fig. 1 ausgezogen dargestellte Schiebestellung verbringbar ist. In der letztgenannten Verschiebestellung ist die Drehfeldkopplung aufgehoben. Auf diese Weise wird der zweite Rotor 12 wahlweise von dem ersten Rotor 11 angetrieben oder nicht angetrieben. Der Primärantrieb 15 kann ein Synchronmotor, ein Asynchronmotor, ein Gleichstrommotor oder ein sonstiger elektrischer Motor sein. Die Ausbildung als nichtelektrischer Antrieb ist ebenso möglich.

Zur Herstellung der Betriebsbereitschaft des Antriebsaggregats zwecks schnellem Hochlauf der Last 17 und anschließendem Antreiben der Last 17 mit einer vorgegebenen Betriebsdrehzahl wird in der in Fig. 1 ausgezogen dargestellten, entkoppelten Stellung des Doppelrotors 10 der Primärantrieb 15 eingeschaltet, der den ersten Rotor 11 auf ein weit oberhalb der Betriebs- oder Nenndrehzahl der Last 17 liegenden Drehzahl beschleunigt. Dann wird durch axiales Verschieben des zweiten Rotors 12 in seine in Fig. 1 strichliniert angedeutete Verschiebestellung die magnetische Kopplung der Drehfelder der beiden Rotoren 11, 12 hergestellt. Dies führt nunmehr zu einem asynchronen Hochbeschleunigen des zweiten Rotors 12, wobei sich die Drehzahl des ersten Rotors 11 reduziert, da diesem Energie entzogen wird. Nach einer gewissen Zeit stellt sich der stationäre Betriebspunkt ein, in dem die Last 17 vom Primärantrieb 15 bei Nenndrehzahl mit Nennmoment angetrieben wird, wobei die gesamte Antriebsleistung vom Primärantrieb 15 aufgebracht wird.

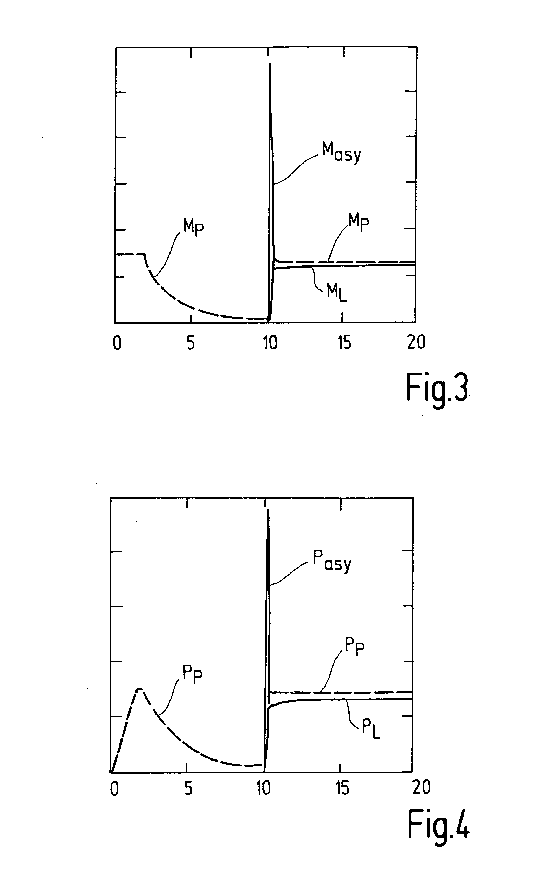

Das Systemverhalten des Antriebsaggregats ist in den Diagrammen der Fig. 2 bis 4 verdeutlicht. Dabei wurde ein zur Drehzahl quadratisches Lastmoment angenommen, wie dies z.B. bei Antreiben von Lüftern, Turboverdichtern oder Kreiselpumpen der Fall ist. Im Diagramm der Fig. 2 ist über die Zeit von 20s die Winkelgeschwindigkeit ω₁ des ersten Rotors 11 und ω₂ des zweiten Rotors 12 dargestellt. Zum Zeitpunkt t=10s wird durch axiales Verschieben des zweiten Rotors 12 die magnetische Kopplung zwischen den Rotoren 11, 12 aktiviert und von diesem Zeitpunkt an die Last 17 beschleunigt. In Fig. 3 ist das Drehmoment M_{P} des Primärantriebs 15 gestrichelt und das Drehmoment M_{L} der Last 17 sowie das Drehmoment M_{asy} vom ersten Rotor 11 auf den zweiten Rotor 12 jeweils ausgezogen dargestellt. In Fig. 4 ist die Leistung P_{P} des Primärantriebs 15 gestrichelt, die Leistungsaufnahme P_{L} der Last 17 sowie die Leistungsübertragung P_{asy} vom ersten Rotor 11 auf den zweiten Rotor 12 jeweils ausgezogen dargestellt. Aus dem Diagramm der Fig. 2 sieht man deutlich, wie im Zeitpunkt t=10s die im ersten Rotor 11 gespeicherte Energie zur Beschleunigung des zweiten Rotors 12 mit angekoppelter Last 17 umgewandelt wird. Im Vergleich der Diagramme in Fig. 3 und 4 erkennt man an den Drehmomenten, dass vom Primärantrieb 15 nur die zum Betrieb erforderliche Leistung aufgebracht werden muss, während der Doppelrotor 10 das hohe Drehmoment für die schnelle Beschleunigung liefert, indem er seine Leistung aus der kinetischen Energie des ersten Rotors 11 bezieht. Die maximal vom Primärantrieb 15 aufgenommene Leistung ist nicht höher als diejenige im stationären Betrieb. Somit ist auch die maximale Stromaufnahme nicht höher als im Stationärbetrieb. Im beschriebenen Beispiel benötigt das Antriebsaggregat beim Erststart 5 - 10s, um die erforderliche Energie im ersten Rotor 11 zu speichern. Bei weiteren Starts ist diese Zeit um 2 - 3s kürzer, da der erste Rotor 11 nicht mehr aus dem Stillstand hoch beschleunigt werden muss. Die Dauer zur Beschleunigung der Last 17 nach Aufschalten des zweiten Rotors 12 beträgt ca. 0,3s.

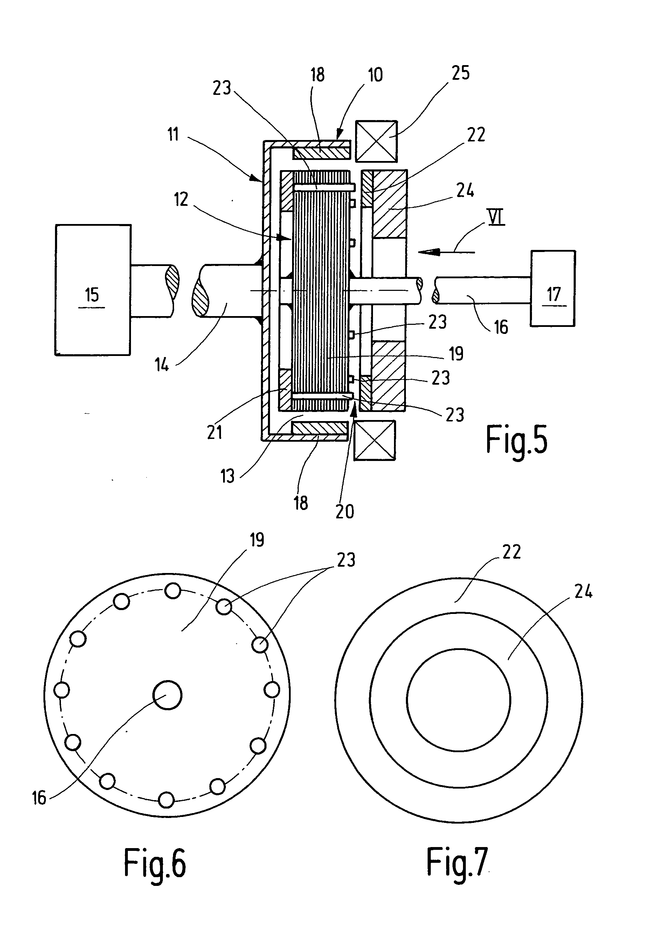

Bei dem in Fig. 5 dargestellten Ausführungsbeispiel des Antriebsaggregats ist auf die mechanische Verschiebung eines Rotors 11 zur Drehfeldkopplung und -entkopplung der Rotoren, die konstruktiv aufwendig ist, verzichtet und der zweite Rotor 12 axial unverschieblich auf der Abtriebswelle 16 festgesetzt. Die Käfigwicklung 20 des zweiten Rotors 12 ist insofern modifiziert, als der zweite Kurzschlussring 22 auf der einen Stirnseite des Rotorkörpers 12 entfernt ist und die einzelnen Käfigstäbe 23 einzeln etwas aus dem Rotorkörper 19 vorstehen (Fig. 6). Der zweite Kurzschlussring 22 ist auf einem ringförmigen Träger aus magnetisch leitendem Material oder permanentmagnetischem Material, kurz Magnetring 24 genannt, aufgesetzt (Fig. 7), der drehbar und axial verschiebbar gehalten ist. Der Magnetring 24 ist von einer Ringwicklung 25 umgeben, die so ausgebildet ist, dass bei einer Bestromung der Ringwicklung 25 der Magnetring 24 axial soweit verschoben wird, dass sich der Kurzschlussring 22 auf die freien Stirnenden der Käfigstäbe 23 aufsetzt und diese kurzschließt.

Anstelle der Käfigwicklung kann der zweite Rotor 12 auch eine mehrsträngige Rotorwicklung tragen, bei der die einen Strangenden der Wicklungsstränge miteinander verbunden sind und das andere Strangende der Wicklungsstränge an jeweils einer auf der Stirnseite des Rotorkörpers liegenden Kontaktfläche angeschlossen ist. Die der Zahl der Wicklungsstränge entsprechende Anzahl von Kontaktflächen liegen auf einem gemeinsamen Teilerkreis. Auf einem dem Magnetring 24 in Fig. 5 und 7 identischen, drehbaren und axial verschieblichen Träger ist ein dem Kurzschlussring 22 in Fig. 5 und 7 entsprechender Kontaktring angeordnet. Durch Axialverschiebung des Trägers wird der Kontaktring auf die Kontaktfläche aufgesetzt, so dass die Rotorwicklung kurzgeschlossen und dadurch die Drehfelder der Rotoren 11, 12 magnetisch gekoppelt sind. Die magnetischen Verhältnisse entsprechen einem Asynchronmotor mit Käfigläufer.

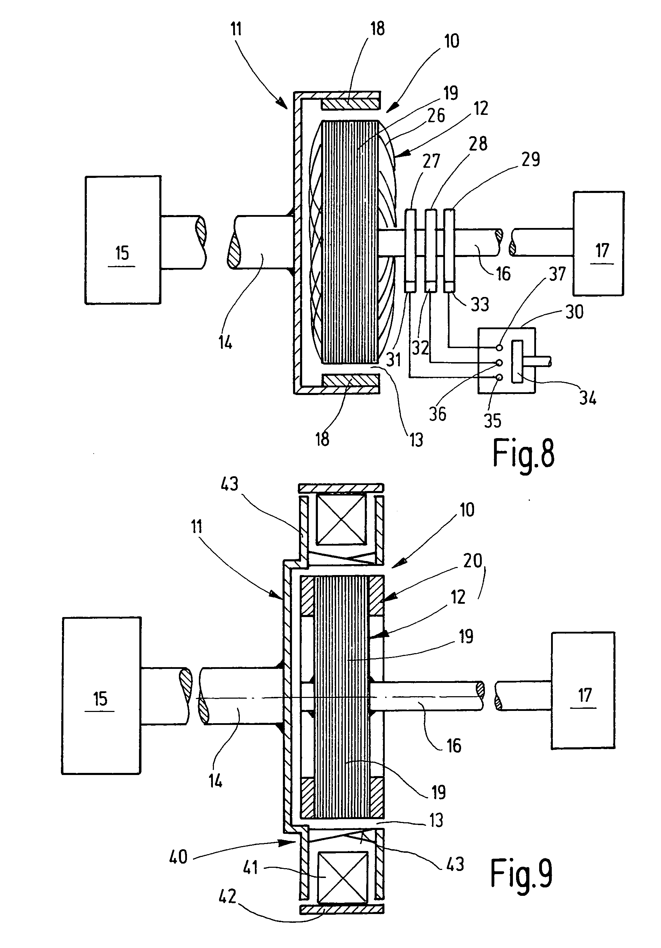

Das in Fig. 8 dargestellte Ausführungsbeispiel des elektrischen Antriebsaggregats ist hinsichtlich der Ausbildung des zweiten Rotors 12 modifiziert. Der zweite Rotor 12 weist eine mehrsträngige Rotorwicklung 26 auf, die in bekannter Weise in Axialnuten des Rotorkörpers 19 eingelegt ist. Im Ausführungsbeispiel der Fig. 8 ist die Rotorwicklung dreisträngig oder dreiphasig ausgeführt, wobei das Strangende eines jeden Wicklungsstrangs an einem von drei auf der Abtriebswelle 16 drehfest sitzenden Schleifringen 27 bis 29 angeschlossen ist. Die anderen Strangenden der drei Wicklungsstränge sind in einem Sternpunkt miteinander verbunden. Auf den Schleifringen 27 bis 29 ist je eine feststehende Schleifbürste 31 bis 33 aufgesetzt, an deren Mittel 30 zum Kurzschließen der Schleifbürsten 31 bis 33 angeschlossen sind. Im Ausführungsbeispiel weisen diese Mittel 30 eine mechanisch, elektrisch oder pneumatisch betätigte Kontaktplatte 34 auf, die auf drei Kontaktstifte 35 bis 37, die mit je einer Schleifbürste 31 bis 33 verbunden sind, aufgesetzt werden kann und dadurch einen Kurzschluss zwischen den Schleifbürsten 31 bis 33 herstellt. Damit ist die Rotorwicklung 26 kurzgeschlossen und zwischen den beiden Rotoren 11, 12 stellen sich magnetische Verhältnisse wie bei einem Asynchronmotor mit Käfigläufer ein. Wird die Kontaktplatte 34 von den Kontaktstiften 35, 36, 37 wieder abgehoben, so wird die Rotorwicklung 26 aufgetrennt und die Drehfeldkopplung zwischen den Rotoren 11, 12 aufgehoben. Allerdings wird hierbei, wie bei dem Ausführungsbeispiel gemäß Fig. 5, aufgrund der Eisenverluste im zweiten Rotor 12 auch bei offener Rotorwicklung 26 ein geringes Drehmoment übertragen, das aber vernachlässigbar ist.

Bei dem in Fig. 9 dargestellten Ausführungsbeispiel des elektrischen Antriebsaggregats ist der zweite Rotor 12 wiederum als Käfigläufer ausgeführt, wie er zu Fig. 1 beschrieben worden ist, so dass gleiche Bauteile mit gleichen Bezugszeichen versehen sind. Der erste Rotor 11 ist dahingehend modifiziert, dass das Felderregersystem durch eine Klauenpolanordnung 40 mit Ringspule 41 realisiert ist. Um verschleißbehaftete Bürsten zu vermeiden ist die Ringspule 41 mit Rückschlussring 42 feststehend angeordnet und die Klauenpole 43 drehfest mit dem Rotor 11 verbunden. Durch Bestromung der Ringspule 41 mit einem Gleichstrom wird die Drehfeldkopplung der Rotoren 11 und 12 hergestellt. Wird die Bestromung der Ringspule 41 aufgehoben, so dreht der erste Rotor 11 frei über den zweiten Rotor 12 hinweg.

Selbstverständlich ist es möglich, den ersten Rotor 11 wie einen herkömmlichen Schleifringläufer mit Läuferwicklung und Schleifringen auszuführen. Allerdings müssen dabei verschleißbehaftete Schleifbürsten in Kauf genommen werden. Auch hier ist wie bei der Klauenpolanordnung 40, von Vorteil, dass die Drehfeldkopplung zwischen den Rotoren 11, 12 leicht durch Einschalten eines Gleichstroms, der über die Schleifringe an die Läuferwicklung gelegt wird, aktiviert werden kann.

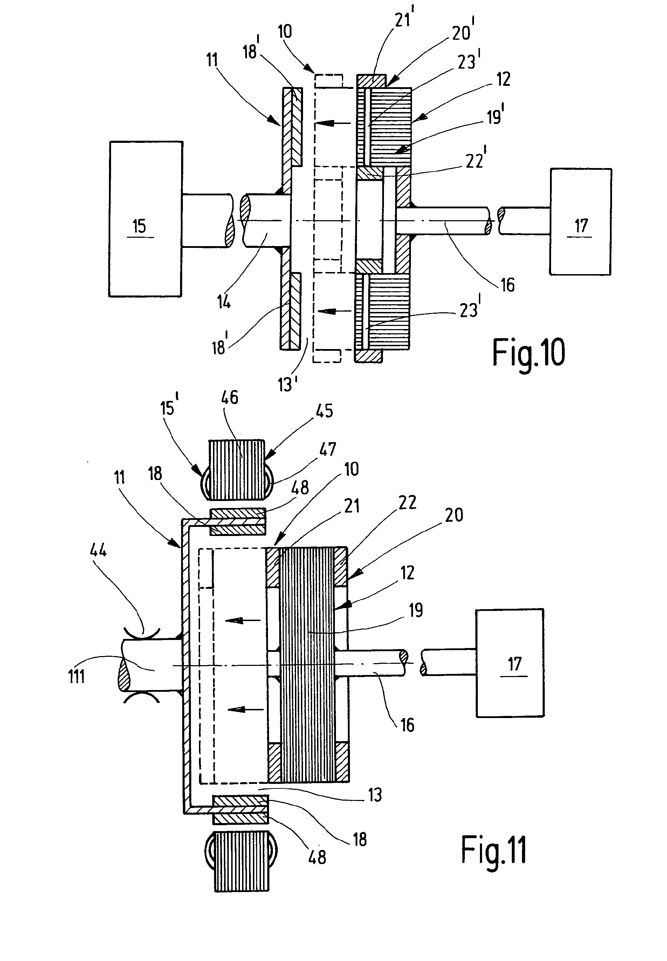

Das in Fig. 10 dargestellte Ausführungsbeispiel des elektrischen Antriebsaggregats unterscheidet sich von dem in Fig. 1 dargestellten Antriebsaggregat dadurch, dass der Doppelrotor 10 in Axialflussbauweise ausgeführt und jeder Rotor 11, 12 als Scheibenrotor ausgeführt ist. Der zweite Rotor 12 ist wiederum axial verschieblich gehalten, und durch Verschiebung des zweiten Rotors 12 in die in Fig. 10 strichliniert dargestellte Verschiebestellung, in der zwischen den Rotoren 11, 12 der Axialluftspalt 13' verbleibt, wird die Drehfeldkopplung zwischen den Rotoren 11, 12 hergestellt. Der Rotorkörper 19' besitzt Ringform und kann in lamellierter Bauweise beispielsweise durch Aufwickeln eines Blechstreifens realisiert werden. Die Käfigstäbe 23' der Käfigwicklung 20' sind radial ausgerichtet und werden am äußeren Stirnende von dem den Rotorkörper 19' außen umschließenden Kurzschlussring 21' und am inneren Stirnende von dem inneren Kurzschlussring 22' jeweils elektrisch miteinander verbunden.

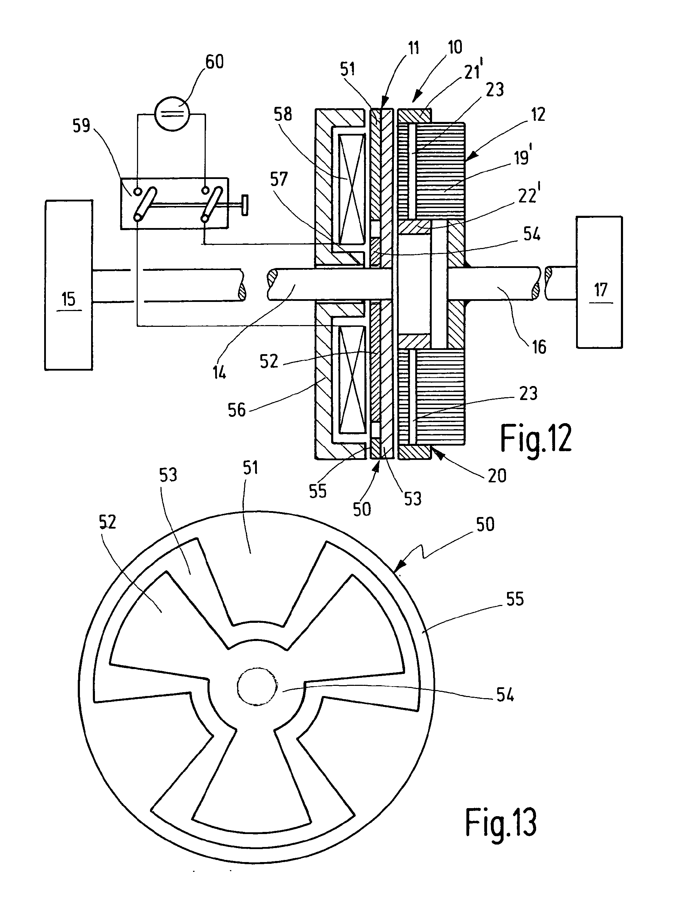

Bei dem in Fig. 11 dargestellten Ausführungsbeispiel des elektrischen Antriebaggregats ist die Antriebswelle 14 mit Primärantrieb 15 für den ersten Rotor 11 entfallen und stattdessen der erste Rotor 11 als Läufer eines Synchronmotors 15' ausgebildet. Der in Fig. 11 schematisch angedeutete Stator 45 des Synchronmotors 15' weist in bekannter Weise einen hohlzylindrischen oder ringförmigen, lamellierten Statorkörper 46 auf, der eine mehrsträngige, vorzugsweise dreisträngige, Statorwicklung 47 trägt. Der mit einer Rotorwelle 111 in einem Lager 44 gelagerte, kappenförmige erste Rotor 11 trägt auf seiner dem Statorkörper 46 zugekehrten Außenseite ein Permanentmagnetsystem aus einer Mehrzahl von um gleiche Umfangswinkel zueinander versetzt angeordneten Permanentmagneten 48, so dass der Rotor 11 auf seiner Außenseite mit den Permanentmagneten 48 für die Funktion des Synchronmotors 15' und auf seiner Innenseite mit den Permanentmagneten 18 für die asynchrone Mitnahme des nach wie vor als Kurzschlussläufer ausgebildeten zweiten Rotors 12 ausgestattet ist. Der Hochlauf des ersten Rotors 11 erfolgt bei abgekoppelter Last 17 (ausgezogene Stellung des Rotors 12 in Fig. 11) wie bei einem Synchronmotor. Nach magnetischer Kopplung der beiden Rotoren 11, 12 durch Verschieben des zweiten Rotors 12 in Pfeilrichtung in Fig. 11 stellen sich die vorstehend beschriebenen Verhältnisse ein.

Das in Fig. 12 und 13 dargestellte Ausführungsbeispiel des elektrischen Antriebsaggregats ist - wie das in Fig. 10 dargestellte Ausführungsbeispiel -in Axialflussbauweise ausgeführt. Die Drehfeldkopplung bzw. -entkopplung zwischen den Rotoren 11, 12 erfolgt hier aber nicht auf mechanischem Weg durch Verschieben eines der Rotoren 11, 12, sondern auf elektrischem Weg. Der erste Rotor 11 ist als Flächenpolscheibe 50 ausgebildet, die eine Mehrzahl von auf einer Scheibenfläche einer Trägerscheibe 53 aus amagnetischem Material angeordnete, magnetische leitfähige, flächige Polsegmente 51, 52 aufweist. Wie aus Fig. 13 ersichtlich ist, sind jeweils drei um gleiche Drehwinkel zueinander versetzt angeordnete Polsegmente 51 bzw. 52 magnetisch leitfähig miteinander verbunden, und zwar die Polsegmente 51 durch einen Innenring 54 und die Polsegmente 52 durch einen Außenring 55. Der Flächenpolscheibe 50 unter Belassung eines Axialluftspalts 13' gegenüberliegend ist ein feststehendes, topfförmiges Rückschlussjoch 56 mit einem zentralen, einstückigen Rückschlussdorn 57 angeordnet. In den Hohlraum zwischen Rückschlussdorn 57 und Topfwand des Rückschlussjochs 56 ist eine Ringspule 58 eingewickelt. Die Ringspule 58 ist über einen Schalter 59 an einer Gleichspannungsquelle 60 angeschlossen.

Der zweite Rotor 12 ist identisch dem zweiten Rotor 12 in Fig. 10 ausgebildet, so dass insoweit auf die dortige Beschreibung verwiesen wird. Gleiche Bauteile in Fig. 10 und 12 sind mit gleichen Bezugszeichen versehen. Bei geschlossenem Schalter 59 ist die Ringspule 58 erregt und die Drehfeldkopplung zwischen den Rotoren 11, 12 hergestellt. Bei geöffnetem Schalter 59 ist die Ringspule 58 entregt und die Drehfeldkopplung aufgehoben, so dass der erste Rotor 11 von der Last 17 abgekoppelt ist und von dem Primärantrieb 15 auf eine über der Nenndrehzahl liegende Drehzahl beschleunigt werden kann. Mit Schließen des Schalters 59 und der damit auf elektrischem Wege herbeigeführten Drehfeldkopplung der Rotoren 11, 12 treten die vorstehend beschriebenen Verhältnisse auf.

Die Erfindung ist nicht auf die einzeln beschriebenen Ausführungsbeispiel beschränkt. So können die einzelnen Ausführungsarten von Rotor 11 und Rotor 12 in unterschiedlicher Weise miteinander kombiniert werden und auch die Ausgestaltungen von ersten und zweiten Rotor 11, 12 miteinander getauscht werden.

## Patentansprüche

1. Elektrisches Antriebsaggregat mit einem Doppelrotor (10) aus einem antreibbaren, ein magnetisches Drehfeld erzeugenden ersten Rotor (11) und einem von dem ersten Rotor (11) antreibbaren, ein magnetisches Drehfeld erzeugenden zweiten Rotor (12), die zwischen sich einen Luftspalt (13) einschließen und durch ihre magnetischen Drehfelder miteinander gekoppelt sind, **dadurch gekennzeichnet, dass** die Kopplung der Drehfelder steuerbar ist und so gesteuert wird, dass die Kopplung erst nach Hochlauf des ersten Rotors (11) auf eine oberhalb der Nenndrehzahl des zweiten Rotors liegenden Drehzahl herstellbar ist.

2. Antriebsaggregat nach Anspruch 1, **dadurch gekennzeichnet, dass** die beiden Rotoren (11, 12) konzentrisch zueinander angeordnet sind und dass die Steuerung der Drehfeldkopplung mechanisch oder elektrisch vorgenommen ist.

3. Antriebsaggregat nach Anspruch 2, **dadurch gekennzeichnet, dass** der eine Rotor (11) ein Felderregersystem und der andere Rotor (12) eine Käfigwicklung (20) trägt und dass der eine Rotor (12) relativ zum anderen Rotor (11) axial verschieblich ausgebildet ist.

4. Antriebsaggregat nach Anspruch 2, **dadurch gekennzeichnet, dass** der eine Rotor (11) ein Felderregersystem und der andere Rotor (12) eine Käfigwicklung (20) mit Käfigstäben (23) und zwei die Käfigstäbe (23) an den Stirnenden elektrisch miteinander verbindenden Kurzschlussringen (21, 22) trägt und dass der eine Kurzschlussring (22) auf einem axial verschiebbaren Träger (24) angeordnet ist und durch Axialverschiebung auf die freiliegenden Stirnenden der Käfigstäbe (23) aufsetzbar ist.

5. Antriebsaggregat nach Anspruch 2, **dadurch gekennzeichnet, dass** der eine Rotor (11) ein Felderregersystem und der andere Rotor (12) eine mehrsträngige Rotorwicklung (26) trägt, deren Wicklungsstränge an einem Strangende miteinander verbunden sind und am anderen Strangende an jeweils einem Schleifring (27 - 29) angeschlossen sind, und dass Mittel (30) zum Kurzschließen der Schleifringe (27 - 29) vorgesehen sind.

6. Antriebsaggregat nach Anspruch 2, **dadurch gekennzeichnet, dass** der eine Rotor (11) ein Felderregersystem und der andere Rotor (12) eine mehrsträngige Rotorwicklung (26) trägt, deren eine Wicklungsenden miteinander verbunden sind und deren andere Wicklungsenden an jeweils einer von auf einem Teilerkreis angeordneten Kontaktflächen angeschlossen sind und dass ein axial verschiebbarer Kontaktring auf die Kontaktflächen aufsetzbar ist.

7. Antriebsaggregat nach einem der Ansprüche 3 - 6, **dadurch gekennzeichnet, dass** das Felderregersystem Permanentmagnete (18) oder eine Erregerwicklung aufweist, die über Schleifringe (27 - 29) an eine Netzgleichspannung anschließbar ist.

8. Antriebsaggregat nach einem der Ansprüche 3 - 6, **dadurch gekennzeichnet, dass** das Felderregersystem eine mit dem Rotor (11) umlaufende Klauenpolanordnung (40) und eine feststehende Ringspule (41) mit magnetischem Rückschlussring (42) aufweist.

9. Antriebsaggregat nach Anspruch 1, **dadurch gekennzeichnet, dass** die beiden Rotoren (11, 12) als Scheibenläufer mit dazwischenliegendem axialen Luftspalt (13') ausgebildet sind und dass die Steuerung der Drehfeldkopplung zwischen den Rotoren (11, 12) mechanisch oder elektrisch vorgenommen ist.

10. Antriebsaggregat nach Anspruch 9, **dadurch gekennzeichnet, dass** der eine Rotor (11) ein Permanentmagnetsystem und der andere Rotor (12) eine Käfigwicklung (20') trägt und dass ein Rotor (12) relativ zum anderen Rotor (11) axial verschieblich ausgebildet ist.

11. Antriebsaggregat nach Anspruch 9, **dadurch gekennzeichnet, dass** der eine Rotor (11) als Fächerpolscheibe (50) mit fächerartig angeordneten, magnetisch leitfähigen Polsegmenten (51, 52) ausgebildet ist und der andere Rotor (12) eine Käfigwicklung (20') trägt, dass der Fächerpolscheibe (50) ein feststehendes, topfförmiges Rückschlussjoch (56) mit zentralem Rückschlussdorn (57) unter Belassung eines Axialluftspalts gegenüberliegt, dass im Rückschlussjoch (56) eine Ringspule (58) einliegt und dass Schaltmittel (59) zum Anschließen der Ringspule (58) an eine Gleichspannungsquelle (60) vorgesehen sind.

12. Antriebsaggregat nach einem der Ansprüche 1 - 11, **dadurch gekennzeichnet, dass** der erste Rotor (11) an einen Primärantrieb (15) angekoppelt ist.

13. Antriebsaggregat nach Anspruch 12, **dadurch gekennzeichnet, dass** der Primärantrieb (15) ein Gleichstrom-, Asynchron-, Synchron- oder ein anderer elektrischer oder nichtelektrischer Motor ist.

14. Antriebsaggregat nach einem der Ansprüche 1 - 8, **dadurch gekennzeichnet, dass** der erste Rotor (11) als Läufer eines elektrischen Motors ausgebildet ist.

15. Antriebsaggregat nach Anspruch 14, **dadurch gekennzeichnet, dass** der elektrische Motor ein Synchronmotor ist und der erste Rotor (11) auf seiner Außenseite ein Permanentmagnetsystem (48) trägt.
